(19) Europäisches Patentamt
European Patent Office
Office européen des brevets

(11) EP 1 373 362 B1

(12) # EUROPÄISCHE PATENTSCHRIFT

(45) Veröffentlichungstag und Bekanntmachung des Hinweises auf die Patenterteilung:
**26.04.2006 Patentblatt 2006/17**

(21) Anmeldenummer: **02727402.6**

(22) Anmeldetag: **13.03.2002**

(51) Int Cl.:
***C08G 64/30*** *(2006.01)*

(86) Internationale Anmeldenummer:
**PCT/EP2002/002724**

(87) Internationale Veröffentlichungsnummer:
**WO 2002/077066 (03.10.2002 Gazette 2002/40)**

(54) **VERFAHREN ZUR HERSTELLUNG VON OLIGOCARBONATEN**
METHOD FOR PRODUCING OLIGOCARBONATES
PROCEDE DE PRODUCTION D'OLIGOCARBONATES

(84) Benannte Vertragsstaaten:
**AT BE CH CY DE DK ES FI FR GB GR IE IT LI LU MC NL PT SE TR**

(30) Priorität: **26.03.2001 DE 10114808**

(43) Veröffentlichungstag der Anmeldung:
**02.01.2004 Patentblatt 2004/01**

(73) Patentinhaber: **Bayer MaterialScience AG**
**51368 Leverkusen (DE)**

(72) Erfinder:
- **HUCKS, Uwe**
**46519 Alpen (DE)**
- **BACHMANN, Rolf**
**51469 Bergisch Gladbach (DE)**
- **RHIEL, Franz, Ferdinand**
**41540 Dormagen (DE)**
- **FISCHER, Thomas**
**47809 Krefeld (DE)**
- **KRATSCHMER, Silke**
**47829 Krefeld (DE)**

(56) Entgegenhaltungen:
**EP-A- 0 710 687** **US-A- 5 648 437**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Anmeldung betrifft ein kontinuierliches Verfahren zur Herstellung von Oligocarbonaten über das Schmelzeumesterungsverfahren.

Oligocarbonate bilden eine isolierbare Zwischenstufe zur Herstellung von Polycarbonaten und sind aus Dihydroxyarylverbindungen und Diarylcarbonaten in Gegenwart von Katalysatoren erhältlich. Die Oligocarbonate besitzen gewichtsgemittelte Molekulargewichte (Mw) von 3.000 bis 20.000, vorzugsweise 3.000 bis 15.000 und werden zu Polycarbonaten mit Molekulargewichten von Mw 15.000 bis 40.000 aufkondensiert.

Die Herstellung von Oligocarbonaten über das Schmelzeumesterungsverfahren ist prinzipiell bekannt. Ein diskontinuierliches Verfahren ist z.B. in DE-A 4 312 390 beschrieben. Weitere Einzelheiten des Schmelzeumesterungsverfahrens sind in der Literatur beschrieben (siehe beispielsweise Hermann Schnell, Chemistry and Physics of Polycarbonates, Polymer Reviews, Vol. 9, 1964, Seiten 44 bis 51, DE-A-1 031 512, US-A 3 022 272, US-A 5 340 905 und US-A 5 399 659).

Für kontinuierliche Fahrweisen werden üblicherweise zur Bildung der Oligocarbonate mehrere Reaktionskessel verwendet, die batchweise im Wechsel betrieben werden, um danach einen kontinuierlichen Produktstrom zu erhalten. Dieses Verfahren wird z.B. in US-A 5 912 318, US-A 5 932 683, US-A 5 912 289, WO 00/26 276 oder EP-A 620 240 beschrieben. Dieses Vorgehen besitzt jedoch den Nachteil, dass die batchweise betriebenen Kessel lange Verweilzeiten von 1 bis 20 Stunden haben und zu wechselnden Oligömerqualitäten führen, die sich bei der Polykondensation nachteilig auswirken. Daneben werden die Temperatur bzw. das Vakuum in den Kesseln wie z.B. in EP-A 620 240 bei jedem Ansatz langsam verbessert, um abgespaltene Monohydroxyarylverbindung zu entfernen. Dies kostet zusätzlich Zeit und Energie, da der Kessel für den nächsten Ansatz wieder abgekühlt werden muss. Darüber hinaus stößt ein scale up der Rührbehälter schnell an Grenzen, weil die zur Verfügung stehende Stoffübergangsfläche im Verhältnis zum Volumen immer kleiner wird.

Die Aufgabe der vorliegenden Erfindung bestand somit darin, ein Verfahren zur Herstellung von Oligocarbonaten zu finden, das kontinuierlich betrieben werden kann, einen besseren Wärmeeintrag und geringere Verweilzeiten im Reaktionsraum ermöglicht.

Die Aufgabe wurde überraschenderweise durch ein Verfahren zur Herstellung von Oligocarbonaten aus Dihydroxyarylverbindungen und Diarylcarbonaten in Gegenwart von Katalysatoren gelöst, dadurch gekennzeichnet, dass nach einer kontinuierlichen Verfahrensweise

a) die Dihydroxyarylverbindung mit dem Diarylcarbonat zunächst ohne Entnahme abgespaltener Monohydroxyarylverbindung umgesetzt wird und

b) danach die Monohydroxyarylverbindung durch Flashverdampfung entfernt und

c) danach die erhaltene Schmelze in einem Verdampfer mit Sumpfvorlage unter Vakuum aufgeheizt wird und

d) entsprechend b) und c) in mehreren, aufeinanderfolgenden Stufen die Temperatur schrittweise erhöht und der Druck schrittweise abgesenkt wird.

Zur Durchführung des Verfahrens können die Reaktionspartner entweder gemeinsam aufgeschmolzen oder aber die feste Dihydroxyarylverbindung in der Diarylcarbonatschmelze oder das feste Diarylcarbonat in der Schmelze der Dihydroxyarylverbindung gelöst werden oder beide Rohstoffe werden als Schmelze, bevorzugt direkt aus der Herstellung, zusammengeführt. Die Verweilzeiten der getrennten Schmelzen der Rohstoffe, insbesondere die der Schmelze der Dihydroxyarylverbindung, werden so kurz wie möglich eingestellt. Das Schmelzegemisch kann wegen des niedrigen Schmelzpunktes des Rohstoffgemisches bei niedrigerer Temperatur auch ohne Schaden länger verweilen. Danach wird der Katalysator, in Phenol gelöst, zugemischt und die Schmelze auf die Reaktionstemperatur erhitzt. Diese beträgt zu Beginn des technisch bedeutsamen Prozesses zur Herstellung von Polycarbonat aus Bisphenol A und Diphenylcarbonat 180 bis 220°C, bevorzugt 190 bis 210°C, besonders bevorzugt 190 bis 200 °C. Bei Verweilzeiten von 15 bis 90 min., vorzugsweise 30 bis 60 min., wird das Reaktionsgleichgewicht eingestellt, ohne dass die gebildete Hydroxyarylverbindung entnommen wird. Die Reaktion kann bei Atmosphärendruck, aber aus technischen Gründen auch bei Überdruck gefahren werden. Der bevorzugte Druck in technischen Anlagen beträgt 2 bis 12 bar.

Das Schmelzegemisch wird in eine erste Vakuumkammer, deren Druck auf 100 bis 400 mbar, vorzugsweise auf 150 bis 300 mbar eingestellt wird, entspannt und direkt danach in einer geeigneten Vorrichtung bei gleichem Druck wieder auf die Eintrittstemperatur erhitzt. Bei dem Entspannungsvorgang wird entstandene Hydroxyarylverbindung mit noch vorhandenen Monomeren verdampft.

Nach einer Verweilzeit von 5 bis 45 min, vorzugsweise 5 bis 30 min, in einer Sumpfvorlage ggf. mit Umpumpung bei gleichem Druck und gleicher Temperatur wird das Reaktionsgemisch in eine zweite Vakuumkammer, deren Druck

50 bis 200 mbar, vorzugsweise 80 bis 150 mbar beträgt, entspannt und direkt danach in einer geeigneten Vorrichtung bei gleichem Druck auf eine Temperatur von 190 bis 250°C, bevorzugt 210 bis 240°C, besonders bevorzugt 210 bis 230°C, erwärmt. Auch hierbei wird entstandene Hydroxyarylverbindung mit noch vorhandenen Monomeren verdampft.

Nach einer Verweilzeit von 5 bis 45 min, vorzugsweise 5 bis 30 min, in einer Sumpfvorlage ggf. mit Umpumpung bei gleichem Druck und gleicher Temperatur wird das Reaktionsgemisch in eine dritte Vakuumkammer, deren Druck 30 bis 150 mbar, vorzugsweise 50 bis 120 mbar beträgt, entspannt und direkt danach in einer geeigneten Vorrichtung bei gleichem Druck auf eine Temperatur von 220 bis 280°C, bevorzugt 240 bis 270°C, besonders bevorzugt 240 bis 260°C, erwärmt. Auch hierbei wird entstandene Hydroxyarylverbindung mit noch vorhandenen Monomeren verdampft.

Nach einer Verweilzeit von 5 bis 30 min, vorzugsweise 5 bis 20 min, in einer Sumpfvorlage ggf. mit Umpumpung bei gleichem Druck und gleicher Temperatur wird das Reaktionsgemisch in eine weitere Vakuumkammer, deren Druck bei 5 bis 100 mbar, bevorzugt 15 bis 100 mbar, besonders bevorzugt 20 bis 80 mbar beträgt, entspannt und direkt danach in einer geeigneten Vorrichtung bei gleichem Druck auf eine Temperatur von 250 bis 300 °C, bevorzugt 260 bis 290 °C, besonders bevorzugt 260 bis 280 °C erwärmt. Auch hierbei wird entstandene Hydroxyarylverbindung mit noch vorhandenen Monomeren verdampft.

Das so erhaltene Oligomere kann nach einer Verweilzeit von 5 bis 30 min, vorzugsweise 5 bis 20 min, isoliert oder direkt weiter aufkondensiert werden.

Die Zahl dieser Stufen, hier beispielhaft 4, kann zwischen 2 und 6 variieren oder vorzugsweise 3 oder 4 sein. Die angegebenen Verweilzeiten, Temperaturen und Drücke sind ebenfalls nur beispielhaft zu sehen und können der Anzahl der Stufen bzw. der angestrebten Viskosität angepasst werden, wobei über alle Stufen die Temperaturen zwischen 180 und 300°C und die Drucke zwischen 400 und 5 mbar variieren können. Die in diesen Stufen erreichte rel. Viskosität des Oligomeren liegt zwischen 1,03 und 1,20, bevorzugt zwischen 1,06 und 1,15, besonders bevorzugt zwischen 1,06 und 1,10. Die relative Viskosität wird als Quotient aus der Viskosität des Lösungsmittels und der Viskosität des in diesem Lösungsmittel gelösten Polymers bestimmt. Sie wurde in Dichlormethan bei einer Konzentration von 5 g/l bei 25°C ermittelt.

Das so erzeugte Oligomere kann in bekannten Reaktorvörrichtungen bei weiterer Temperatursteigerung und fallenden Drucken, ggf. nach Zugabe weiterer Katalysatoren zu höhermolekularen Polycarbonaten aufkondensiert werden.

Von besonderem Vorteil ist auch, dass eine Produktion von Polycarbonaten an Standorten erfolgen kann, an denen nicht die typische Infrastruktur zur Errichtung chemischer Anlagen gegeben ist. Zu diesem Zweck wird das Oligocarbonat in geeigneten Aggregaten, wie beispielsweise Extrudern, aufgeschmolzen und ggf. nach Zugabe von Monomeren zur Korrektur des Molverhältnisses und ggf. Katalysatoren in geeignete Polykondensationsapparate gefördert und aufkondensiert. Die abzuspaltenden Mengen von Monohydroxyarylverbindungen sind gering und stellen deshalb kein Problem dar. Die Herstellung der Rohstoffe, in der Regel mit hohem Potenzial bzgl. des Umfeldes durch z.B. Chlor, Kohlenmonoxid, Phosgen, halogenierte Lösemittel, Abwasser und hohe Mengen von Monohydroxyarylverbindungen, kann an anderen Standorten erfolgen.

Die für die einzelnen Verfahrensschritte geeigneten Apparate und Reaktoren sind entsprechend dem Verfahrensverlauf Wärmetauscher, Apparate oder Rührbehälter, welche die nötige Verweilzeit bei gleichbleibender Temperatur bereitstellen, Entspannungsapparate wie großvolumige Behälter, Abscheider oder Zyklone; Rührbehälter, Umlaufverdampfer, Fallfilmverdampfer oder sonstige käufliche Apparate, die den nötigen Wärmeeintrag ermöglichen und Behältnisse, welche die geforderten Verweilzeiten nach dem Erwärmen der Reaktionsschmelze sicherstellen.

Die Rohrleitungen zwischen den Apparaten sollten selbstverständlich so kurz wie möglich sein und die Krümmungen der Leitungen so gering wie möglich gehalten werden. Dabei sind die äußeren Rahmenbedingungen des Anlagenaufbaus zu berücksichtigen.

Besonders geeignet sind zur Fertigung der Apparate, Reaktoren, Rohrleitungen, Armaturen und Pumpen nicht rostende Stähle vom Typ Cr Ni (Mo) 18/10 wie z. B. 1.4571 oder 1.4541 (Stahlschlüssel 2001, Verlag: Stahlschlüssel Wegst GmbH, Th-Heuss-Straße 36, D-71672 Marbach) oder anderen, die diesem ähnlich sind und in der chemischen Industrie zu den Standardwerkstoffen zählen.

Für die bevorzugte Ausführung des Verfahrens wird zum Erwärmen der Rohstoffschmelze ein üblicher Wärmetauscher verwendet. Als Verweilbehälter wird für die Reaktionsgleichgewichtseinstellung eine Lochbodenkolonne eingesetzt. Die Lochbodenkolonne ist ein zweckmäßigerweise senkrechtstehendes Rohr größeren Durchmessers, in dem Lochböden mit einem oder mehreren Löchern in regelmäßigen Abständen angeordnet sind. Die freie Fläche des Loches bzw. der Löcher im Boden im Verhältnis zur Gesamtfläche des Lochbodens ist so gewählt, dass durch eine ausreichend hohe Strömungsgeschwindigkeit durch das Loch bzw. die Löcher eine Rückvermischung in der Reaktionsschmelze vermieden wird. Durch diese Merkmale ist eine kaskadierende Funktionsweise der Lochbodenkolonne sichergestellt und eine Minimierung der Verweilzeit für eine produktschonende Verfahrensführung gegeben.

Die Entspannungsvorgänge, das heißt die Flashverdampfungen, werden in Abscheidebehältern, vorzugsweise in Zentrifugalabscheidern, bevorzugt Zyklonen oder in Umlenkabscheidern durchgeführt, die unter im Vergleich zur Vorstufe geringerem Absolutdruck stehen. Die entstehenden Phenoldämpfe werden über eine Druckregelung abgeleitet.

Die abgetrennte Flüssigkeit wird in einen Fallfilmverdampfer abgeleitet. Vorzugsweise sind dabei die Zentrifugalabscheider, bevorzugt Zyklone oder Umlenkabscheider hydraulisch vom Fallfilmverdampfer mit Sumpfbehälter getrennt. Die gleichmäßige Verteilung auf die Fallrohre erfolgt über einen Flüssigkeitsverteiler, der geometrisch und strömungstechnisch so gestaltet sein muss, dass keine Bereiche mit hohen Verweilzeiten für die Schmelze vorhanden sind, d.h. bevorzugt erfolgt die Verteilung oberhalb der Fallfilmverdampfer in strömungstechnisch totraumfreien Verteilern. In den Fallfilmverdampfern wird die Wärme zur Temperaturerhöhung der Schmelze eingebracht. Der Fallfilmverdampfer besteht aus einem oder mehreren Rohren, die vom Heizmedium umströmt werden. Auf den Rohrinnenseiten fließt die Schmelze nach unten und wird in einem temperierten Sumpfbehälter aufgefangen. Die gewählten Rohrdurchmesser liegen zwischen 25 und 150 mm, vorzugsweise zwischen 50 und 100 mm. Die Rohrlängen betragen 4 bis 20 m, vorzugsweise 8 bis 16 m. Zur Verbesserung der Filmströmung und Erhöhung der Oberfläche sowie des Produktinhaltes im Rohr ist der Einsatz von Drallrohren anstelle glatter Rohre vorteilhaft. Die in dem Behälter aufgefangene Schmelze wird nach einer Verweilzeit von 5 bis 30 Minuten in die folgende Reaktionsstufe gefördert. Zur Durchmischung der Schmelze in dem Behälter ist es zweckmäßig, einen Teilstrom der Schmelze, die zur nächsten Stufe gefördert wird, zurückzuführen. Von besonderem Vorteil ist dabei, die Schmelzen aus dem Fallfilmverdampfer und der Umpumpung über einen Verteiler, der aus einer Gitterkonstruktion oder Füllkörperpackung zur Oberflächenvergrößerung im oberen Teil des Behälters besteht, in den Sumpf des Behälters zurückzuführen.

Diese Gitterkonstruktion wird vorteilhaft als Konstruktion mit senkrechten Lochblechen ausgeführt, an denen die Schmelze herunterrinnt. Die Löcher in den Blechen werden vorteilhaft in Form von Kreisen, Dreiecken, Quadraten, länglichen Rechtecken oder Sechsecken ausgeführt. Besonders vorteilhaft ist die Wahl von Sechsecken. Der Durchmesser der Löcher, definiert als Durchmesser D eines Kreises äquivalenter Fläche, ist vorteilhaft nach der Formel

$D = x\left(\eta^2 / \left(kg^2\, m^{-5}\, s^{-2}\right)\right)^{\frac{1}{3}}$ zu gestalten. Hierbei ist $\eta$ die Schmelzeviskosität in Pa s. Der dimensionslose Faktor x wird bevorzugt zwischen 0,009 und 0,21 variiert, besonders bevorzugt zwischen 0,013 und 0,11 und ganz besonders bevorzugt zwischen 0,017 und 0,07. Das Verhältnis zwischen freier Fläche und Gesamtfläche der Lochbleche ist vorteilhaft zwischen 0,5 und 0,95, besonders vorteilhaft zwischen 0,7 und 0,9 zu wählen.

Die geometrische Anordnung der Lochbleche kann z.B. in Form eines oder mehrerer konzentrischer Zylinder, parallel oder radial erfolgen. Bevorzugt wird die Anordnung als Zylinder oder radial. Die Verteilung erfolgt vorteilhafterweise mit strömungstechnisch totraumfreien Verteilern. Die Belastung pro Länge kann in weiten Bereichen variiert werden: zwischen 0,05 und 5 $m^3/(m*h)$, bevorzugt zwischen 0,1 und 4 $m^3/(m*h)$ und besonders bevorzugt zwischen 0,5 und 3 $m^3/(m*h)$.

Die Zahl der Flash- und Fallfilmverdampferstufen beträgt 2 bis 6, vorzugsweise 3 oder 4. Es wurde festgestellt, dass die Anzahl einen deutlichen Einfluss auf den bei der Schmelzeumesterung immer notwendigen Diarylcarbonatüberschuss hat. Der Überschuss liegt bei Einsatz von Bisphenol A und Diphenylcarbonat als Rohstoffe zwischen 2 und 30 Mol-%, vorzugsweise zwischen 4 und 25 Mol-%, besonders bevorzugt zwischen 6 und 22 Mol-%, ganz besonders bevorzugt zwischen 6 und 20 Mol-% und hängt auch davon ab, welcher OH-Endgruppengehalt im aus diesem Oligocarbonat herzustellenden Polycarbonat erreicht werden soll. Die Werte können dann anders sein, wenn eine Korrektur der OH-Endgruppengehalte durch eine Nachdosierung von Diarylcarbonaten oder Dihydroxyarylverbindungen erfolgen soll.

Die aus den Flash- und Fallfilmverdampferstufen über die Druckregelungen erhaltenen Brüden von Phenol mit Diarylcarbonaten, die aufgrund der Gleichgewichtsreaktion und der thermodynamischen Daten immer partiell mit verdampft werden, sowie sonstiger Verbindungen, die aus den Ausgangsstoffen, dem Katalysator und den Oligomeren durch Nebenreaktionen und Zersetzungsreaktionen gebildet werden, sowie auch Verunreinigungen der Ausgangsstoffe, Katalysatorspaltprodukte, Oligomere etc, werden vorteilhafterweise ohne Kondensation in Wärmetauschern in eine Destillationskolonne geleitet, um das Phenol als Reinstoff über Kopf zu isolieren. Durch geeignete Wahl der Betriebsparameter der Kolonne sind Phenolqualitäten erreichbar, die den direkten Einsatz in der Bisphenol A- oder Diphenylcarbonatsynthese ermöglichen. Dies ist aus ökologischen und ökonomischen Gründen notwendig und einsichtig.

Das Schmelzumesterungsverfahren geht bekanntlich von Dihydroxyarylverbindungen, Diarylcarbonaten und gegebenenfalls Verzweigern und/oder Monohydroxyarylverbindungen aus.

Für das erfindungsgemäße Verfahren geeignete Dihydroxyarylverbindungen sind solche der Formel (II)

HO-Z-OH (II)

in denen

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Beispiele für Dihydroxyarylverbindungen der Formel (II) sind

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'- Bis-(hydroxyphenyl)-diisopropylbenzole
sowie deren kernalkylierte und kennhalogenierte Verbindungen.

Diese und weitere geeignete andere Dihydroxyarylverbindungen sind z. B. in den US-PS 3 028 365, 3 148 172, 3275 601, 2 991 273, 3 271 367, 3 062 781, 2 970 131 und 2 999 846, in DE-A 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964" beschrieben.

Bevorzugte Dihydroxyarylverbindungen sind beispielsweise:
4,4'-Dihydroxydiphenyl,
2,2-Bis-(4-hydroxyphenyl)propan,
2,4-Bis-(4-hydroxyphenyl)-2-methylbutan,
1,1-Bis-(4-hydroxyphenyl)cyclohexan,
1,1-Bis-(4-hydroxyphenyl)-4-methylcyclohexan,
α,α'-Bis-(4-hydroxyphenyl)-p-diisopropylbenzol,
α,α'-Bis-(4-hydroxyphenyl)-m-diisopropylbenzol,
Bis-(4-hydroxyphenyl)sulfon,
Bis-(4-hydroxyphenyl)methan,
1,1-Bis-(4-hydroxyphenyl)-3,3,5-trimethylcyclohexan,
Bis-(2,6-dimethyl-4-hydroxyphenyl)propan,
Bis-(4-hydroxyphenyl)hexafluorpropan,
(4-Hydroxyphenyl)-1-phenylethan,
(4-Hydroxyphenyl)diphenylmethan,
Dihydroxydiphenylether,
4,4'-Thiobisphenol,
Bis-(4-Hydroxyphenyl)-1-(1 -naphthyl)ethan,
Bis-(4-Hydroxyphenyl)-1-(2-naphthyl)ethan,
Dihydroxy-3-(4-hydroxyphenyl)-1,1,3-trimethyl-1*H*-inden-5-ol,
Dihydroxy-1-(4-hydroxyphenyl)-1,3,3-trimethyl-1*H*-inden-5-ol,
2,2',3,3'-Tetrahydro-3,3,3',3'-tetramethyl-1,1'-Spirobi[1*H*-inden]-5,5'-diol.

Besonders bevorzugt sind
Resorcin,
Bis-(4-Hydroxyphenyl)-1-(1-naphthyl)ethan,
Bis-(4-Hydroxyphenyl)-1-(2-naphthyl)ethan,
2,2-Bis-(4-hydroxyphenyl)propan,
α,α'-Bis-(4-hydroxyphenyl)-p-diisopropylbenzol,
α,α'-Bis-(4-hydroxyphenyl)-m-diisopropylbenzol,
1,1-Bis-(4-hydroxyphenyl)cyclohexan,
Bis-(4-hydroxyphenyl)-3,3,5-trimethylcyclohexan,
Bis-(4-Hydroxyphenyl)diphenylmethan.

Ganz besonders bevorzugt
Bis-(4-hydroxyphenyl)-3,3,5-trimethylcyclohexan,
4,4'-Dihydroxydiphenyl,
2,2-Bis-(4-hydroxyphenyl)propan.

Es können sowohl eine Dihydroxyarylverbindung der Formel (II) unter Bildung von Homopolycarbonaten als auch mehrere Dihydroxyarylverbindungen der Formel (II) unter Bildung von Copolycarbonaten verwendet werden.

Die Dihydroxyarylverbindungen können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Diarylcarbonate im Sinne vorliegender Erfindung sind solche der Formel (II)

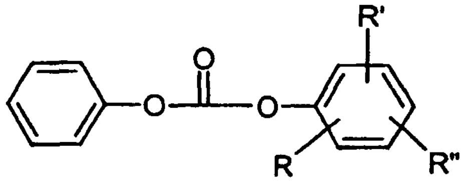

(II)

und Formel (III),

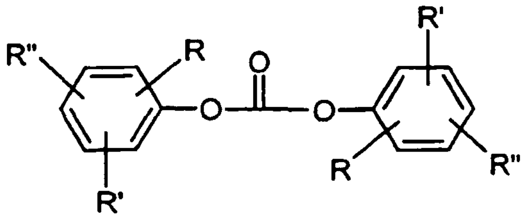

(III)

wobei R, R' und R" unabhängig voneinander H, gegebenenfalls verzweigte $C_1$-$C_{34}$-Alkyl/Cycloalkyl, $C_7$-$C_{34}$-Alkaryl oder $C_6$-$C_{34}$-Aryl darstellen können, beispielsweise
Diphenylcarbonat,
Butylphenyl-phenylcarbonat,
Di-Butylphenylcarbonat,
Isobutylphenyl-phenylcarbonat,
Di-Isobutylphenylcarbonat,
tert-Butylphenyl-phenylcarbonat,
Di-tert-Butylphenylcarbonat,
n-Pentylphenyl-phenylcarbonat,
Di-(n-Pentylphenyl)carbonat,
n-Hexylphenyl-phenylcarbonat,
Di-(n-Hexylphenyl)carbonat,
Cyclohexylphenyl-phenylcarbonat,
Di-Cyclohexylphenylcarbonat,
Phenylphenol-phenylcarbonat,
Di-Phenylphenolcarbonat,
Isooctylphenyl-phenylcarbonat,
Di-Isooctylphenylcarbonat,
n-Nonylphenyl-phenylcärbonat,
Di-(n-Nonylphenyl)carbonat,
Cumylphenyl-phenylcarbonat,
Di-Cumylphenylcarbonat,
Naphthylphenyl-phenylcarbonat,
Di-Naphthylphenylcarbonat,
Di-tert-Butylphenyl-phenylcarbonat,
Di-(Di-tert-Butylphenyl)carbonat,
Dicumylphenyl-phenylcarbonat,
Di-(Dicumylphenyl)carbonat,
4-Phenoxyphenyl-phenylcarbonat,
Di-(4-Phenoxyphenyl)carbonat,
3-Pentadecylphenyl-phenylcarbonat,
Di-(3-Pentadecylphenyl)carbonat
Tritylphenyl-phenylcarbonat,
Di-Tritylphenylcarbonat,
bevorzugt
Diphenylcarbonat,

tert-Butylphenyl-phenylcarbonat,
Di-tert-Butylphenylcarbonat,
Phenylphenol-phenylcarbonat,
Di-Phenylphenolcarbonat,
Cumylphenyl-phenylcarbonat,
Di-Cumylphenylcarbonat,
besonders bevorzugt Diphenylcarbonat.

Die Diarylcarbonate können auch mit Restgehalten der Monohydroxyarylverbindungen, aus denen sie hergestellt wurden, eingesetzt werden. Die Gehalte können bis zu 20 %, vorzugsweise 10 %, besonders bevorzugt bis 5 % und ganz besonders bevorzugt bis zu 2 % betragen.

Bezogen auf die Dihydroxyarylverbindung werden die Diarylcarbonate mit 1,02 bis 1,30 Mol, bevorzugt mit 1,04 bis 1,25 Mol, besonders bevorzugt mit 1,06 bis 1,22 Mol, ganz besonders bevorzugt mit 1,06 bis 1,20 Mol pro Mol Dihydroxyarylverbindung eingesetzt. Es können auch Mischungen der oben genannten Diarylcarbonate eingesetzt werden.

Daneben können die als Carbonate eingesetzten phenolischen Verbindungen auch direkt als Monohydroxyarylverbindung neben einem der genannten Carbonate verwendet werden, um die Endgruppen des Oligocarbonats bzw. des Polycarbonats zu beeinflussen. Dabei ist eine Monohydroxyarylverbindung zu wählen, deren Siedepunkt über dem der Monohydroxyarylverbindung, aus der das Diarylcarbonat gebildet wurde, liegt. Bevorzugte Mischungen sind solche mit Diphenylcarbonat. Nach dem erfindungsgemäßen Verfahren besteht die Möglichkeit, die Monohydroxyarylverbindung zu jedem Zeitpunkt - vor, zu Beginn oder während - der Reaktion zuzugeben, bevorzugt zu Beginn der Reaktion, und die Zugabe kann in mehrere Portionen aufgeteilt werden. Der Anteil an freier Monohydroxyarylverbindung kann 0,4 - 17 Mol-%, bevorzugt 1,3 - 8,6 Mol-% (bezogen auf die Dihydroxyarylverbindung) betragen.

Für die erfindungsgemäße Synthese werden Ammonium- oder Phosphoniumkatalysatoren eingesetzt, die für die Zwecke dieser Anmeldung gemeinsam auch als Oniumverbindungen bezeichnet werden. Sie werden bevorzugt in Mengen von $10^{-8}$ bis $10^{-3}$ Mol, bezogen auf ein Mol Dihydroxyarylverbindung, besonders bevorzugt in Mengen von $10^{-7}$ bis $10^{-4}$ Mol, eingesetzt.

Als Katalysator für die Herstellung der erfindungsgemäßen Oligocarbonate können Phosphoniumsalze verwendet werden, gegebenenfalls in Kombination mit anderen geeigneten Katalysatoren, wie z. B. andere Oniumverbindungen, Alkali- oder Erdalkalimetallverbindungen.

Phosphoniumsalze im Sinne der Erfindung sind solche der Formel (IV),

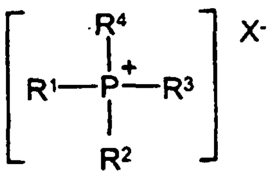

(IV)

wobei $R^{1-4}$ dieselben oder verschiedene $C_1$-$C_{10}$-Alkyle, $C_6$-$C_{10}$-Aryle, $C_7$-$C_{10}$-Arylalkyle oder $C_5$-$C_6$-Cycloalkyle sein können, bevorzugt Methyl oder $C_6$-$C_{14}$-Aryle, besonders bevorzugt Methyl oder Phenyl, und $X^-$ ein Anion wie Hydroxid, Sulfat, Hydrogensulfat, Hydrogencarbonat, Carbonat, ein Halogenid, bevorzugt Chlorid, oder ein Alkoholat der Formel OR sein kann, wobei R $C_6$-$C_{14}$-Aryl oder $C_7$-$C_{12}$-Aralkyl, bevorzugt Phenyl, sein kann. Bevorzugte Katalysatoren sind
Tetraphenylphosphoniumchlorid,
Tetraphenylphosphoniumhydroxid,
Tetraphenylphosphoniumphenolat,
besonders bevorzugt Tetraphenylphosphoniumphenolat.

Bevorzugte Mengen an Phosphoniumsalzkatalysatoren sind $10^{-8}$ bis $10^{-3}$ Mol pro Mol Diphenol und die am meisten bevorzugten Katalysatormengen sind $10^{-7}$ bis $10^{-4}$ Mol pro Mol Diphenol.

Weitere Cokatalysatoren können gegebenenfalls zusätzlich zu dem Phosphoniumsalz verwendet werden, um die Geschwindigkeit der Polymerisation zu erhöhen. Dazu gehören Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium. Am meisten bevorzugt sind Natriumhydroxid- und Natriumphenolat sowie Natriumbisphenolat. Die Mengen des Cokatalysators können im Bereich von 1 bis 2.000 ppb, vorzugsweise 5 bis 1.000 ppb und am meisten bevorzugt 10 bis 500 ppb liegen, jeweils berechnet als Natrium und bezogen auf zu bildendes Polycarbonat.

Die Oligocarbonate können gezielt verzweigt werden und können daher geringe Mengen von 0,02 bis 3,6 Mol-% (bezogen auf die Dihydroxyarylverbindung) an Verzweigern enthalten. Geeignete Verzweiger sind die für die Polycarbonatherstellung geeigneten Verbindungen mit drei und mehr funktionellen Gruppen, vorzugsweise solche mit drei oder mehr als drei phenolischen OH-Gruppen, beispielsweise 1,1,1-Tri-(4-hydroxyphenyl)ethan und Isatinbiskresol.

Die erhaltenen Oligocarbonate können in der bekannten Weise weiter zu Polycarbonaten aufkondensiert werden. Vor der Aufkondensation können zur Korrektur des Endgruppenverhältnisses von phenolischen OH-Endgruppen zu Arylcarbonat-Endgruppen Diarylcarbonate oder Dihydroxyarylverbindungen zugemischt werden, um im fertigen Polycarbonat gezielt das angestrebte Endgruppenverhältnis zu erreichen. Durch Zumischen substituierter Monoarylverbindungen, ggf. auch deren Diarylcarbonate, kann die Arylcarbonat-Endgruppe partiell verändert werden. Weiter können zur Steigerung der Reaktionsgeschwindigkeit Oniumverbindungen wie Ammonium- oder Phosphoniumverbindungen oder alkalisch wirkende Alkali- oder Erdalkalimetallsalze als Katalysatoren zugemischt werden.

Die Oligocarbonate können auch in Gegenwart anderer Prepolymerer oder Polymerer auf die angestrebten Molekulargewichte aufkondensiert werden, um Blends mit ausgeprägten und verbesserten Eigenschaften zu erhalten. Beispielsweise sei hier die Polykondensation in Gegenwart von ABS genannt.

Zur Änderung der Eigenschaften der Polycarbonate, die aus den Oligocarbonaten erzeugt werden, können den erfindungsgemäßen Oligocarbonaten vor oder nach der Synthese Hilfs- und Verstärkungsstoffe zugemischt werden. Als solche sind u. a. in Betracht zu ziehen: Thermo- und UV-Stabitisatoren, Fließhilfsmittel, Entformungsmittel, Flammschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO-A 99/55772, S. 15 - 25, und in "Plastics Additives", R. Gächter und H. Müller, Hanser Publishers 1983, beschrieben.

**<u>Beispiel:</u>**

Aus einer Vorlage werden 94,7 kg/h Schmelzegemisch, bestehend aus 49,8 kg Diphenylcarbonat/h (232,7 mol/h) und 44,9 kg Bisphenol A/h (196,9 mol/h), unter Zusetzen von 0,0034 kg Tetraphenylphosphoniumphenolat/h (0,0079 mol/h) gelöst in 0,1 kg Phenol/h durch einen Wärmetauscher gepumpt, auf 190°C erwärmt und durch eine Verweilkolonne geführt. Die Verweilkolonne ist ein Rohr, in das Lochblenden in gleichen Abständen eingesetzt sind, so dass Kammern gleichen Volumens entstehen. Durch diese Anordnung wird eine Rückströmung vermieden. Die mittlere Verweilzeit beträgt 45 Minuten.

Die Schmelze wird dann über ein Entspannungsventil in einen unter 200 mbar stehenden Abscheider geleitet. Die abfließende Schmelze wird in einem, ebenfalls unter 200 mbar stehenden, Fallfilmverdampfer wieder auf 190 °C erwärmt und in einer Vorlage aufgefangen. Nach einer Verweilzeit von 20 Minuten wird die Schmelze in die nächsten drei, gleichartig aufgebauten Stufen gepumpt. Die Bedingungen in der 2. / 3. / 4. Stufe sind 80 / 50 / 25 mbar; 225 / 250 / 270°C und 20 / 10 / 10 Minuten. Das entstandene Oligomere hat eine rel. Viskosität von 1,068. Der OH-Endgruppengehalt beträgt 0,69 %. Alle Brüden werden über Druckregelungen in eine unter Vakuum stehende Kolonne geführt und als Kondensate abgeleitet.

## Patentansprüche

**1.** Verfahren zur Herstellung von Oligocarbonaten aus Dihydroxyarylverbindungen und Diarylcarbonaten in Gegenwart von Katalysatoren, **dadurch gekennzeichnet, dass** nach einer kontinuierlichen Verfahrensweise

a) die Dihydroxyarylverbindung mit dem Diarylcarbonat zunächst ohne Entnahme abgespaltener Monohydroxyarylverbindung umgesetzt wird und
b) danach die Monohydroxyarylverbindung durch Flashverdampfung abgezogen und
c) danach die erhaltene Schmelze in einem Verdampfer mit Sumpfvorlage unter Vakuum aufgeheizt wird und
d) entsprechend b) und c) in mehreren, aufeinanderfolgenden Stufen die Temperatur schrittweise erhöht und der Druck schrittweise abgesenkt wird.

**2.** Verfahren nach Anspruch 1, **dadurch gekennzeichnet, dass**

a) in einer Lochbodenkolonne
b) in einem Zentrifugal- oder Umlenkabscheider und
c) in einem Fallfilmverdampfer mit Sumpfvorlage

ausgeführt wird.

3. Verfahren nach den Ansprüchen 1 und 2, **dadurch gekennzeichnet, dass** die Flashverdampfung b) und Verdampfung im Verdampfer mit Sumpfvorlage c) in 2 bis 6 Stufen durchgeführt wird.

4. Verfahren nach den Ansprüchen 1 bis 3, **dadurch gekennzeichnet, dass** die Flashverdampfung b) vom Verdampfer mit Sumpfvorlage c) hydraulisch getrennt ist.

5. Verfahren nach den Ansprüchen 1 bis, 4, **dadurch gekennzeichnet, dass** die Verteilung der Flüssigkeit oberhalb der Fallfilmverdampfer in strömungstechnisch totraumfreien Verteilern erfolgt.

6. Verfahren nach den Ansprüchen 1 c) und 2 c), **dadurch gekennzeichnet, dass** die Rohre der Fallfilmverdampfer einen Durchmesser von 25 bis 150 mm haben.

7. Verfahren nach den Ansprüchen 1 c) und 2 c), **dadurch gekennzeichnet, dass** die Rohre der Fallfilmverdampfer eine Länge von 4 bis 20 m haben.

8. Verfahren nach den Ansprüchen 1 c) und 2 c), **dadurch gekennzeichnet, dass** die Rohre der Fallfilmverdampfer als Drallrohre ausgebildet sind.

9. Verfahren nach den Ansprüchen 1 bis 8, **dadurch gekennzeichnet, dass** die Vermischung im Sumpfbehälter durch rückgeführte und der aus dem Fallfilmverdampfer stammenden Schmelze so erfolgt, dass die Schmelzen über eine Gitterkonstruktion oder Füllkörperpackung im oberen Teil des Behälters in den Sumpf zurückgeführt werden.

10. Verfahren nach Anspruch 9 **dadurch gekennzeichnet, dass** die Belastung der Gitterkonstruktion pro Länge zwischen 0,05 und 5 $m^3/(m*h)$ gewählt wird.

**Revendications**

1. Procédé de fabrication d'oligocarbonates à partir de composés aryles dihydroxylés et de carbonates de diaryles en présence de catalyseurs, **caractérisé en ce que**, selon un processus continu

   a) le composé aryle dihydroxylé est d'abord mis en réaction avec le carbonate de diaryle sans soutirage de composé aryle monohydroxylé séparé et
   b) le composé aryle monohydroxylé est ensuite éliminé par vaporisation instantanée et
   c) la matière fondue obtenue est ensuite chauffée sous vide dans un évaporateur avec liquide de pied et
   d) suivant b) et c), la température est augmentée progressivement en plusieurs étapes successives et la pression progressivement abaissée.

2. Procédé suivant la revendication 1, **caractérisé en ce que** l'exécution a lieu

   a) dans une colonne à plancher perforé
   b) dans un séparateur centrifuge ou à déviation et
   c) dans un évaporateur à film vertical avec liquide de pied.

3. Procédé suivant les revendications 1 et 2, **caractérisé en ce que** la vaporisation instantanée b) et la vaporisation dans l'évaporateur avec liquide de pied c) sont effectuées en 2 à 6 étapes.

4. Procédé suivant les revendications 1 à 3, **caractérisé en ce que** la vaporisation instantanée b) ect séparée hydrauliquement de l'évaporateur avec liquide de pied c).

5. Procédé suivant les revendications 1 à 4, **caractérisé en ce que** la distribution du liquide au-dessus de l'évaporateur à film vertical se fait dans des distributeurs sans espaces morts du point de vue de la dynamique des fluides.

6. Procédé suivant les revendications 1 c) et 2 c), **caractérisé en ce que** les tubes de l'évaporateur à film vertical ont un diamètre de 25 à 150 mm.

7. Procédé suivant les revendications 1 c) et 2 c), **caractérisé en ce que** les tubes de l'évaporateur à film vertical ont une longueur de 4 à 20 m.

**8.** Procédé suivant les revendications 1 c) et 2 c), **caractérisé en ce que** les tubes de l'évaporateur à film vertical sont réalisés sous la forme de tubes spiralés.

**9.** Procédé, suivant les revendications 1 à 8, **caractérisé en ce que** le mélange dans le réservoir de pied de la matière fondue recyclée et de celle provenant de l'évaporateur à film vertical se fait de telle façon que les matières fondues sont renvoyées dans le pied via une construction en forme de grille ou un empilage de corps de remplissage dans la partie supérieure du récipient.

**10.** Procédé suivant la revendication 9, **caractérisé en ce que** la charge de la construction en forme de grille par unité de longueur est sélectionnée entre 0,05 et 5 $m^3/(m*h)$.

## Claims

**1.** A process for the preparation of oligocarbonates from dihydroxyaryl compounds and diaryl carbonates in the presence of catalysts, **characterised in that**, using a continuous procedure,

a) the dihydroxyaryl compound is first reacted with the diaryl carbonate without removing the monohydroxyaryl compound being released and
b) then the monohydroxyaryl compound is withdrawn by flash evaporation and
c) then the melt obtained is heated under vacuum in an evaporator with a base collector vessel and
d) the temperature is increased stepwise and the pressure is decreased stepwise in several stages following one after the other in accordance with b) and c).

**2.** A process according to Claim 1, **characterised in that**

a) is performed in a perforated plate column
b) is performed in a centrifugal or deflector separator and
c) is performed in a falling film evaporator with a base collector vessel.

**3.** A process according to Claims 1 and 2, **characterised in that** flash evaporation b) and evaporation in an evaporator with a base collector vessel c) are performed in 2 to 6 stages.

**4.** A process according to Claims 1 to 3, **characterised in that** the flash evaporation procedure b) is hydraulically separated from the evaporator with a base collector c).

**5.** A process according to Claims 1 to 4, **characterised in that** distribution of the liquid above the falling film evaporator takes place in distributors with no flow-engineering dead-spaces.

**6.** A process according to Claims 1c) and 2c), **characterised in that** the tubes in the falling film evaporator have a diameter of 25 to 150 mm.

**7.** A process according to Claims 1c) and 2c), **characterised in that** the tubes in the falling film evaporator have a length of 4 to 20 m.

**8.** A process according to Claims 1c) and 2c), **characterised in that** the tubes in the falling film evaporator are designed as spiral tubes.

**9.** A process according to Claims 1 to 8, **characterised in that** blending in the base container by recycled melt and that of the melt being produced from the falling film evaporator takes place in such a way that the melts are recycled to the upper part of the container at the base via a lattice construction or a filler packing.

**10.** A process according to Claim 9, **characterised in that** the loading in the lattice construction is chosen to be between 0.05 and 5 $m^3/(m*h)$ per length.